# EUROPEAN PATENT SPECIFICATION

(11) **EP 3 635 330 B1**
(45) Date of publication and mention of the grant of the patent: **19.08.2020**
(21) Application number: 18742600.2
(22) Date of filing: 20.06.2018
(51) Int. Cl.: G01B 11/30, G01B 11/245, B21B 38/02, G01B 17/08, G01B 21/30, G01B 11/06

(54) **CONTROL OF FLATNESS OF METAL SHEETS OBTAINED BY FLATTENING AND SHEARING UNCOILED METAL SHEET WEBS**
REGELUNG DER FLACHHEIT VON METALLBLECHEN, DIE DURCH ABFLACHEN UND SCHEREN VON ABGEWICKELTEN METALLBLECHBAHNEN ERHALTEN WERDEN
CONTRÔLE DE PLANÉITÉ DE TÔLES MÉTALLIQUES OBTENUES PAR APLATISSEMENT ET CISAILLEMENT DE BANDES DE TÔLE MÉTALLIQUE NON ENROULÉES

(30) Priority: 20.06.2017 IT 201700068661
(43) Date of publication of application: 15.04.2020
(73) Proprietor: Moro S.p.A., 10036 Settimo Torinese (TO) (IT)
(72) Inventor: POMPILI, Luca, 10036 Settimo Torinese (TO) (IT)
(74) Representative: Bergadano, Mirko
(86) International application number: PCT/IB2018/054551
(87) International publication number: WO 2018/235017

(56) References cited:
- DE-A1- 19 932 324
- FR-A1- 2 695 049
- GB-A- 2 077 912
- US-A- 4 752 695
- US-A- 5 465 214
- Reinhard Noll ET AL: "Online-Lasermesstechnik für Walzprodukte", STAHL UND EISEN, 15 May 2007 (2007-05-15), pages 99-105, XP055450712, DUSSELDORF, DE Retrieved from the Internet: URL:http://docplayer.org/44210728-Online-l asermesstechnik-fuer-walzprodukte.html [retrieved on 2018-02-13]

## Description

### Technical Field of the Invention

The present invention relates to control of flatness of metal sheets obtained by flattening and shearing uncoiled metal sheet webs.

### State of the art

As is known, metal sheets are produced from coiled metal sheet webs in computer numerical control (CNC) production lines where metal sheet webs are first uncoiled and stretched at the yield strength to remove internal tensions, and then flattened and finally sheared into sheets, which are then stacked and palletized for shipment.

The metal sheets produced often have a series of defects, generally due to widespread non-flatness phenomena. A metal sheet that has not been flattened properly causes difficulty to any type of subsequent working, causing inevitable delays in production and, in certain cases, damage to machine tools (for example in the case of laser and plasma cutting). Flatness of the metal sheets is therefore an essential parameter in order to ensure a high-quality final product without subsequent steps and hence additional costs.

Currently, flatness of metal sheets is controlled manually and this requires several minutes for each sheet or pack of sheets. Typically, a steel ruler is placed at multiple locations on the sheets and the extent of any deviations ("clearance") between the metal sheets and the ruler is measured. This situation results in the flatness being controlled in very few plants, only randomly and in any case with considerable expenditure of time and resources.

FR 2 695 049 A1 describes a method for assessing the flatness of a sheet by computing an index representing the flatness of the sheet along its length, wherein distances of the sheet from a reference plane parallel to the sheet along a median line substantially equidistant from the side edges of the sheet and along two side lines arranged on opposite sides of the median line are first computed, and the difference between the distance of the median line from the reference plane and the average distance of the side lines from the reference plane is then computed, which difference defines the index representing the flatness of the sheet. The flatness of the sheet is assessed by implementing an optical triangulation technique using three optical measuring devices arranged along a line transverse to the sheet and connected to an electronic processing system.

GB 2 077 912 A discloses a system for monitoring the flatness of a metal sheet, wherein light beams emitted by laser sources are directed towards the middle and the edges of a hot-rolled metal sheet by means of fixed and rotating mirrors, which allow the use of the system with different sheet widths. The points of incidence of the light beams are observed by photodiode cameras whose receiving axes are orientated by fixed and rotating mirrors, so that the points of incidence remain in the observation fields of the cameras. The levels of the points of incidence are obtained by triangulation and are used in the calculation of the flatness of the sheet.

US 5 465 214 A discloses a method and a device for measuring the shape and/or flatness of a longitudinal fibre of a running strip. Readings are taken of the heights of a set of n points of index of the fibre and a function of the readings depending on the shape of the fibre is determined. When readings are taken of the height of a point of index, readings are also simultaneously taken of the heights of at least two other nearby points located on both sides of the aforesaid point of index, the curvature of the fibre in the vicinity of the aforesaid point of index is then calculated approximately, and then a function representing the change in the curvature between the points of index 1 and index n is determined and, by successive integrations of the function, a function representing the actual shape of the fibre between the points of index i and index n, and the length of the fibre are determined, based on which its elongation ratio is also calculated.

US 4 752 695 A discloses a method of detecting the flatness of a moving rolled strip, wherein the levels of a plurality of points on the surface of the rolled strip are determined in relation to a horizontal reference plane by optical triangulation, and flatness indexes are calculated based on these levels. The position of at least one of the side edges of the strip is detected with respect to a predetermined fixed reference in a cross-section of the strip containing at least a plurality of points. The real, or true, position of a point with respect to the fixed reference is calculated and the orientation of the emitted beam and of the retransmitted, or reflected, beam used in the triangulation is modified to compensate for the real, or true, position of the point.

Reinhard Noll et al.: "Online- Lasermesstechnik für Walzprodukte", Stahl und Eisen, 15 May 2007 (2007-05-15), pages 99-105, XP055450712, Dusseldorf, DE, describes on-line measurement of geometrical quantities of rolled products in a manufacturing process by using the laser measurement technology, through which one- to three-dimensional geometric quantities can be measured, such as the thickness of cold rolled sheets, the cross sectional profile of rails and flatness defects of heavy plates.

DE 199 32 324 A1 discloses a process for determining the waviness and/or the planarity of a strip, comprising judging the position of the surface of the strip point-wise and/or line-wise in a space, modeling a virtual bearing surface to this surface, and judging the waviness from the deviations of the surface from the bearing surface.

### Object and Summary of the Invention

An object of the present invention is to provide a technology that allows flatness of metal sheets obtained by flattening an uncoiled metal sheet web to be rapidly and automatically controlled, and that can be installed in a production line and operate continuously, i.e. without imposing any delay to the production of the sheets.

According to the present invention, a metal sheet flatness control system to control flatness of metal sheets obtained by flattening and shearing an uncoiled metal sheet web is provided, as claimed in the appended claims.

### Brief Description of the Drawings

Figure 1 schematically shows an embodiment of a metal sheet flatness control system to control flatness of metal sheets obtained by flattening and shearing an uncoiled metal sheet web.
Figure 2 schematically shows a positioning device forming part of the metal sheet flatness control system in Figure 1.
Figure 3 schematically shows a measurement pattern performed by the metal sheet flatness control system in Figure 1.
Figure 4 schematically shows a different embodiment of a metal sheet flatness control system to control flatness of metal sheets obtained by flattening and shearing an uncoiled metal sheet web.
Figure 5 schematically shows a measurement pattern performed by the metal sheet flatness control system in Figure 4.

### Detailed Description of Preferred Embodiments of the Invention

The present invention will now be described in detail with reference to the accompanying drawings in order to allow a skilled person to implement it and use it. Various modifications to the described embodiments will be readily apparent to those skilled in the art and the general principles described may be applied to other embodiments and applications without however departing from the protective scope of the present invention as defined in the appended claims. Therefore, the present invention should not be regarded as limited to the embodiments described and illustrated herein, but they must be given the broadest protective scope consistent with the principles and features described and claimed herein.

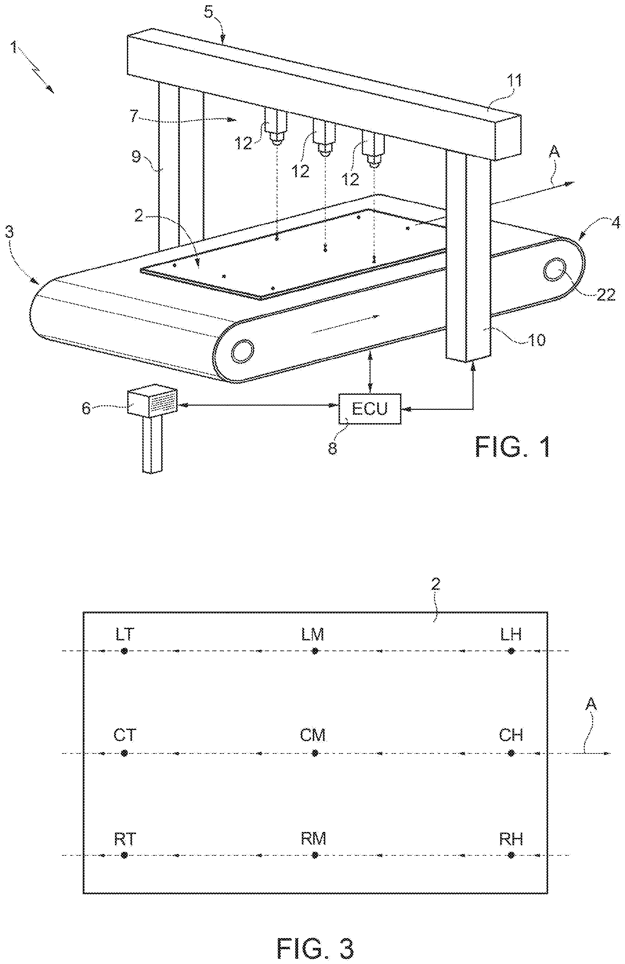

Figure 1 schematically shows a metal sheet flatness control system, referenced to as a whole with numeral **1,** to control flatness of metal sheets **2** obtained by flattening and shearing uncoiled metal sheet webs (not shown) in a production line **3,** of which, for the sake of simplicity of illustration, only the parts necessary for understanding the present invention are shown, in the illustrated example a conveyor **4** operable to carry individual metal sheets **2** towards a stacking station (not shown) or stacks of metal sheets **2** towards a palletizing and packaging station (not shown).

For the sake of simplicity of description, the description below will refer to the advance of individual metal sheets **2** in a rectilinear direction of advance **A** towards a stacking station. In the illustrated example, therefore, the metal sheets **2** have a longitudinal axis generally parallel to, possibly coinciding with, the direction of advance **A**, and a transverse axis perpendicular to the longitudinal axis and, hence, transverse, in particular perpendicular, to the direction of advance **A**.

The metal sheet flatness control system **1** essentially comprises:
- a support frame **5** adapted to be arranged along the production line **4** of the metal sheets **2**, downstream of a station (not shown) for shearing the metal sheets **2,** so as to allow flatness thereof to be selectively controlled, or downstream of a station for stacking the metal sheets **2**, so as to allow flatness of the upper metal sheet **2** in the stack to be controlled;
- a user terminal **6**, for example of the type equipped with a display, a keyboard and a mouse, or of the type comprising a touch-screen, to allow an operator to interact with the metal sheet flatness control system **1**;
- a measurement apparatus **7** carried by the support frame **5** and designed to perform measurements in certain points of the metal sheets **2** to allow flatness thereof to be controlled, and to output measurement data indicative of the measurements performed; and
- an electronic control unit **8** electrically connected to the measurement apparatus **7** and to the user terminal **6** and programmed to store and execute control software designed to implement operations described below to control flatness of the metal sheets **2**.

In the embodiment illustrated in Figure 1, the support frame **5** is of a portal type, is arranged astride the conveyor **4**, and is formed by two vertical uprights **9, 10,** which are arranged on opposite sides of the conveyor **4** and may have a fixed height, or, conveniently, an adjustable height to correct any flatness defects of the floor on which they rest and to which they are fixed, and by a horizontal crosspiece **11** extending between, and stably connected to, upper ends of the uprights **9, 10,** so as to result parallel to the plane where the metal sheets **2** lie on the conveyor **4.**

The height of the uprights **9, 10,** is such as to allow the flatness control system **1** to be installed in any industrial production line **3** and to operate with metal sheets **2** of any thickness or with stacks of metal sheets **2** having heights and sizes typically used in the industry.

The crosspiece **11** is the result of mechanical machining by machine tools that guarantee high precision of its linearity along the longitudinal axis (in the order of 0.1 mm by 2 m of length). The length of the crosspiece **11** is such as to be greater than the width of any industrial production line **3,** while its cross-section is such as to enable the measurement apparatus **7** to be supported.

In a different embodiment, the support frame **5** may take a different configuration from the one described and illustrated in Figure 1 to adapt to the specific configuration of the production line **5** of the metal sheets **2** or of the environment in which it is placed, and for example it could be of an L-shaped type, i.e. devoid of one of the two uprights **9, 10** and, hence, comprising a single upright and one crosspiece, or of the overhead type, and, hence, with neither of the two uprights **9, 10** but comprising a single crosspiece suitably fixed above the conveyor **4.**

The measurement apparatus **7** comprises one or more contactless distance measuring devices, commonly known as telemeters **12,** which are operable to measure, in a known manner and, hence, not described in detail, their distance from the metal sheets **2** crossing the support frame **5,** and to output distance data indicative of the distance measurements performed, which are related to, and consequently indicative of, the heights of the metal sheets **2** relative to the plane of the conveyor **4,** which represents a reference plane at a zero height.

In a preferred embodiment, the telemeters **12** can be of the laser type with characteristics such as to perform distance measurements with an accuracy of less than 0.5 mm in a range of distances that allow the telemeters **12** to be used with different thicknesses of the metal sheet **2** or different heights of the metal sheet stacks (up to a distance of 1 m), regardless of the type of steel, of its light reflection characteristics, and of its different and variable colours. Conveniently, the telemeters **12** are designed to measure distances by triangulation and are of the type that allows not only the distance, but also the thickness of light-transparent or light-semi-transparent sheets, for example glass sheets, to be measured. In different embodiments, the telemeters **12** could be optical or ultrasound telemeters.

Each telemeter **12** is further equipped with a control electronics, for example in the form of electronic printed circuit boards, designed to control operation and setting of the telemeter **12** and to output distance data indicative of the distance measurements performed by the telemeter **12.**

In the embodiment illustrated in Figure 1, the telemeters **12** are three in number and are arranged spaced apart along the crosspiece **11** of the support frame **5,** so resulting arranged side by side in a direction transverse, in particular orthogonal, to the direction of advance **A** of the metal sheets **2** in the production line **3.** The two external or lateral telemeters **12** are conveniently arranged so as to perform distance measurements relative to a metal sheet **2** at edge areas thereof, while the intermediate or central telemeter **12** is conveniently arranged so as to perform distance measurements relative to the metal sheet **2** at an intermediate area thereof, in particular at a median longitudinal axis of the metal sheet **2.**

In a different embodiment, the telemeters **12** may be in a number different from three and appropriately arranged to allow certain flatness defects of the metal sheet 2 to be detected.

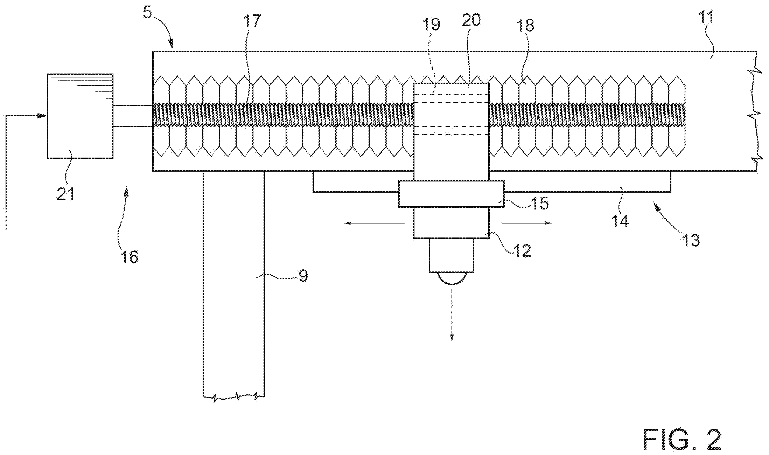

The telemeters **12** can be mounted on the crosspiece **11** of the support frame **5** either directly, as shown in Figure 1, so as to result in them being in fixed positions with respect to the crosspiece **11** when flatness of the metal sheets **2** is being controlled, or through the interposition of respective electronically-controlled positioning devices **13,** only one of which is shown in Figure 2, which are designed to allow the telemeters **12** to be precisely and rapidly positioned along the crosspiece **11** of the support frame **5.**

In the first embodiment, i.e. the one in which the telemeters **12** have a fixed position with respect to the crosspiece **11,** and which result in a saving in the costs of production and maintenance of the flatness control system **1,** yet with a reduction in performance compared to the second embodiment, the impossibility of adjusting the position of the telemeters **12** in the direction transverse to the direction of advance **A** of the metal sheets **12** can be (partly) compensated for by using a number of telemeters **12** greater than three, but always conveniently an odd number, for example seven or nine.

In this embodiment, one of the telemeters **12** is arranged at the central longitudinal axis of the conveyor **4,** while the lateral telemeters **12** are arranged on the right and left of the central telemeter **12,** preferably symmetrically and at increasing distances. The positions of the lateral telemeters **12** may optionally be manually adjustable during installation on the crosspiece **11,** but remain fixed during operation.

The distance measurements performed by more than three telemeters **12** allow, in general, the metal sheets **12** to be a better sampled than when only three telemeters **12** are employed. The presence of multiple lateral telemeters **12** at increasing distances from the central longitudinal axis of the conveyor **4** also increases the likelihood that metal sheets **2** of different widths may be measured close to their lateral ends, and the distance measurements that may be performed outside the lateral ends of the metal sheets **2** (a condition detectable by the telemeters **12)** are automatically excluded from the analysis.

In the second embodiment, i.e. the one in which the positions of the telemeters **12** are adjustable along the crosspiece **11,** each positioning device **13** comprises:
- a rectilinear guide **14** preferably fixed on a lower face of the crosspiece **11** of the support frame **5,**
- a shoe **15** slidably mounted on the guide **14** and on which a corresponding telemeter **12** is mounted, and
- an actuator device **16** coupled to the shoe **15** to move it along the guide **14.**

In a preferred embodiment, the actuator device **16** is of a screw-and-nut type and comprises a recirculating ball worm screw **17** rotatably mounted inside the crosspiece **11** of the support frame **5** and protected from dust by a plastic bellows **18,** a nut screw **19** coupled to the worm screw **17** and rigidly connected to the shoe **15** by means of a bracket **20,** and an electric stepper motor **21,** which is mechanically coupled to the worm screw **17,** electrically connected to and controlled by the electronic control unit **8,** and operable to rotate the worm screw **17** and consequently move the shoe **15** along the guide **14.**

In a different embodiment, the actuator device **16** may be of a hydraulic, pneumatic or electrical type that is different from the one described, yet still under the control of the electronic control unit **8.**

The positioning of the telemeters **12** in the direction transverse to the direction of advance **A** of the metal sheets **2** is important to ensure the measurement of the metal sheets **2** at locations suitable for extracting all the data necessary for a proper assessment of their flatness. For this reason, the control software executed by the electronic control unit **8** is designed to return the telemeters **12** to their rest positions in the direction transverse to the direction of advance **A** of the metal sheets **2** for each metal sheet **2** the flatness of which is to be controlled, so as to ensure the reliability of the flatness control for any width of the metal sheets **2** even if the latter, after the shearing, or the stacks of metal sheets, after the stacking, are not always arranged on the conveyor **4** in the same position.

Once a metal sheet **2** has been measured in the manner described in detail below, the two lateral telemeters **12** are returned to their rest position at the outer ends of their travel on the crosspiece **11.** The repositioning of the telemeters **12** is started by the control software executed by the electronic control unit **8** whenever a new metal sheet **2** is detected by the central telemeter **12.** At that moment, the lateral telemeters **12** are moved towards the middle of the crosspiece **11** until they detect the lateral ends of the metal sheet **2,** and then moved further towards the middle of the crosspiece **11** by a predetermined distance *d,* in a preferred embodiment equal to 5 cm. Once the lateral telemeters **12** are repositioned, the central telemeter **12** repositions itself at an intermediate distance between the lateral telemeters **12,** thus approximately in the middle of the metal sheet **2.**

The steel-making rolling process causes significant deviations of the actual thicknesses of the metal strips **2** of the edges thereof with respect to the nominal ones, especially for thicknesses greater than 3-4 mm. Therefore, the measurement of the thicknesses of the metal sheets 2 at the edges thereof is not significant and in fact the standard for measuring the thickness is deviating from the edge by 3-4 cm. The extent of the movement of the lateral telemeters **12** from the edge of the metal sheets **2** is aimed at positioning the lateral telemeters **12** outside the area at the lateral ends of the metal sheets **12** affected by thickness deviations introduced during the rolling step.

Alternatively, the rest position of the lateral telemeters **12** can coincide with the inner end of their travel along the crosspiece **11** and in this case the repositioning can take place by moving the lateral telemeters **2** towards the outside of the metal sheets **2** until meeting the lateral ends of the metal sheets **2** and thus moving towards the middle of the metal sheets **2** by a distance *d.*

In one embodiment, the activation and deactivation times of the telemeter **12** to measure the flatness of the metal sheets **2** can be determined by the control software executed by the electronic control unit **8** based on signals supplied by accessory laser sensors (not shown) associated with the telemeters **12** and also carried by the respective shoes **13.** Conveniently, the laser sensors are spaced from the corresponding telemeter **12** by the aforementioned distance *d,* so that when they detect the ends of the underlying metal sheets **2** when the shoes **13** move from their rest position towards the middle or the outside of the metal sheets **2,** the corresponding telemeters **12** are already positioned at said distance *d* from the lateral edges of the metal sheets **2,** without the need for the shoes **13** to make further movements.

In a different embodiment, the position of the central telemeter **12** can be kept fixed, with consequent simplification of the repositioning, considering that its precise positioning in the middle of the metal sheets **2** is less critical than the positioning of the lateral telemeters **12.**

In any case, the positioning of the telemeters **12** in the direction transverse to the direction of advance **A** of the metal sheets **2** must take just a few moments, so as to allow the distance measurements to start immediately after the arrival of the metal sheets **2** into the operating range of the telemeters **12,** without having to stop the conveyor **4.** More precisely, the repositioning of the telemeters **12** must take place in less time, typically less than one second, than the time taken by a metal sheet **2** to travel a predetermined distance t in the direction of advance **A** of the metal sheets **2,** a distance that may conveniently coincide with the aforementioned distance *d*.

As in the direction transverse to the direction of advance **A** of the metal sheets **2,** the longitudinal ends (head and tail) of the metal sheets **2** in the direction of advance **A** are also not reprehensive of the quality of the flatness, since they are affected by defects introduced by the shearing. In fact, measurements of the flatness of the metal sheets **2** at the head and tail ends made at a distance less than said distance *t* would not be significant.

In a different embodiment, the start and end times of the measurements of the flatness of the metal sheets **2** can be determined by the control software executed by the electronic control unit **8** based on the distance data received from the telemeters **12,** in particular when a significant variation (i.e. greater than a threshold) of the distance measured by the telemeters **12** is detected.

In order to control the flatness of a metal sheet **2,** the control software executed by the electronic control unit **8** is also designed to operate the telemeters **12** repeatedly, with a predefined frequency, so as to perform a series of distance measurements relative to the metal sheet **2** in the direction of advance **A.**

The distance measurements can then be associated with corresponding positions used for measurements in the direction of advance **A** of the metal sheet **2,** which positions can be determined by the control software based either on the speed of advance of the metal sheet **2** and the time elapsed between the distance measurements, or on location data supplied by a suitable location device provided in a suitable position along the path travelled by the metal sheets **2** when controlling their flatness.

In a preferred embodiment, the location device can be provided in the form of a rotary encoder **22** mounted on a pin of the conveyor **4** and in wired or wireless communication with the electronic control unit **8.**

The control software is designed to operate each telemeter **12** so that it performs a series of distance measurements in the direction of advance **A** of the metal sheet **2,** wherein each series of distance measurements conveniently comprises at least two distance measurements at edge areas of the metal sheet **2,** respectively, and one distance measurement at an intermediate area of the metal sheet.

In this way, nine distance measurements are taken at the nine points of the metal sheet as shown in Figure 3, i.e. three triplets of distance measurements, one triplet per telemeter **12,** and each comprising three distance measurements taken at three points of the sheet in the direction of advance **A** of the metal sheet **2,** two of which are made at predetermined distances from the head and the tail of the metal sheet **2,** preferably at the aforementioned distance t from the head and the tail, and one is made in an intermediate position between the first two distance measurements, preferably a median position.

The nine distance measurements are indicated below as LH, LM, LT, CH, CM, CT, RH, RM and RT, where the first letter identifies the corresponding telemeter (L, C and R for the left, centre and right telemeters, respectively), while the second letter identifies the measurement point along the longitudinal axis of the metal sheet (H, M and T for the head, middle and tail points, respectively).

Each of the nine distance measurements may correspond to a single measurement out of the train of distance measurements, the one closest to the measurement point shown in Figure 3, or, conveniently, to an average of a number of distance measurements closest to the measurement point shown in Figure 3, or still, to an interpolation at the measurement point shown in Figure 3 of the n closest measurements.

The control software is also designed to compute, based on the distance measurements, and for each metal sheet **2** or even randomly just for one or more metal sheets **2,** flatness indexes characterizing and describing the flatness of the metal sheet **2,** and comprising:
- a detail flatness index indicative of the flatness of the metal sheet **2** in a given direction, and
- a summary flatness index indicative of the flatness of the metal sheet **2** in the direction of advance **A** and in the direction transverse to the direction of advance **A.**

In particular, the detail flatness index is computed based on distance measurements in the given direction, while the summary flatness index is computed based on distance measurements in the direction of advance **A** and distance measurements in the direction transverse to the direction of advance **A.**

Conveniently, the detail flatness index is computed based on distance measurements in the direction of advance **A,** and in particular based on differences between consecutive distance measurements in the direction of advance **A.**

Alternatively, the detail flatness index may be computed based on distance measurements in the direction transverse to the direction of advance **A** of the metal sheets **2,** and in particular based on differences between consecutive distance measurements in the direction transverse to the direction of advance **A.**

Conveniently, in an example not according to the invention, the summary flatness index is computed as a maximum longitudinal deviation of the distance measurements in the direction of advance **A,** and as a maximum transverse deviation of the distance measurements in the direction transverse to the direction of advance **A.**

According to the invention, the summary flatness index is calculated as a maximum longitudinal deviation of consecutive distance measurements in the direction of advance **A** of the metal sheets **2,** and as a maximum transverse deviation of consecutive distance measurements in the direction transverse to the direction of advance **A.**

Conveniently, the maximum longitudinal deviation is computed as the maximum value of the absolute values of the differences between consecutive distance measurements in the direction of advance **A** of the metal sheets **2,** while the maximum transverse deviation is computed as the maximum value of the absolute values of the differences between consecutive distance measurements in the direction transverse to the direction of advance **A.**

In a preferred embodiment, the detail flatness index is defined by the following differences between consecutive distance measurements: LH-LM, LM-LT, CH-CM, CM-CT, RH-RM, RM-RT, while the summary flatness index is defined by the maximum value of the absolute values of the following differences between consecutive distance measurements: LH-LM, LM-LT, CH-CM, CM-CT, RH-RM, RM-RT, and by the maximum value of the absolute values of the following differences between consecutive distance measurements: LH-CH, CH-RH, LM-CM, CM-RM, LT-CT, CT-RT.

The control software is further designed to compare the flatness index values with one or more threshold values or tolerances settable through the user interface displayed by the user terminal **6,** and classify the metal sheets **2** into one of a plurality of flatness categories also settable through the same user interface, which categories can be limited to just two, corresponding to compliant metal sheets and non-compliant metal sheets.

Optionally, the control software can be further designed to compute the longitudinal (lengths) and transversal (widths) dimensions of the controlled metal sheets 2. The width of a metal sheet **2** can be computed during the repositioning of the telemeters **12,** by computing the distance between the two lateral telemeters **12** when they detect the ends of the metal sheet **2.** The length can be computed based on location data supplied by the encoder **22** as a distance travelled by the metal sheet **2** between the time instants in which the telemeters **12** detect the beginning and the end of the presence thereof.

The control software is further designed to expose a graphical user interface (GUI) accessible through the user terminal **6** and possibly even remotely, for example through authenticated web service access, and such as to provide, in real time and in a manner that ensures immediate understanding, an operator with the acquired measurements and associated processed data, including, for example, the distance measurements made by the telemeters **12,** as well as the summary and detail flatness indexes, the widths and lengths of the controlled metal sheets **2,** as well as any error or alarm conditions.

The control software may be further designed to include a suitably a-priori trained artificial intelligence engine to suggest in real time to an operator, based on the features of the production line **3** and the distance measurements and flatness indexes, advisable corrections to the configuration of the flattening machine in order to improve the flatness of the metal sheets **2** produced.

The control software is further designed to allow an operator to impart, through the graphical user interface displayed by the user terminal **6,** commands and configurations to the flatness control system **1,** such as for example setting tolerances on flatness indexes, after security authentication (for example by entering a keyword), unloading historical data, adjusting or calibrating the system, re-controlling a non-compliant metal sheet or stack of metal sheets **2,** printing reports, for example one for each controlled sheet or stack of sheets, reporting for example the timestamps for the starting point of the control of the metal sheets 2, the summary and detail flatness indexes, which can for example be printed with a printer connected to the electronic control unit **8** during the passage of the metal sheets **2** or when requested by the operator through the graphical user interface.

The control software may be further designed to operate buzzers for acoustically signalling any error or alarm conditions, and any non-compliant metal sheets **2** or stacks of metal sheets **2.**

Lastly, the flatness control system **1** may be further configured to connect to external software systems, for example through an Ethernet, Wi-Fi, USB, etc., connection, to receive and transmit data, for example to a quality control software, for example to record the controls performed, generate quality certificates and set off any non-compliances and obtain production quality statistics, a computerised system for monitoring and controlling the production function of a company and known as Manufacturing Execution System (MES), for example to count the sheets or the packages produced and associate the results of the quality controls with the lots of machined material, a company management system, for example to assign a quality class to the finished products, assign them a price list and direct them to customers, a data storage system, electronic control systems for controlling machines downstream of the flatness control system, such as for example a machine for sorting the metal sheets according to their quality characteristics, and machines upstream of the flatness control system, for example to halt the flattening of the metal sheet web in the event of a non-compliant flatness.

Lastly, it is clear that modifications and variations may be made to the flatness control system **1** described and illustrated above without however departing from the scope of protection defined by the appended claims.

For example, the mutual movement of the metal sheets **2** relative to the telemeters **12,** which is required to perform the above-described series of distance measurements, could be obtained according to a different paradigm than the one described. In particular, instead of being obtained, as previously described, by keeping the position of the telemeters **12** fixed in the direction of advance **A** of the metal sheets **2** and exploiting the advance thereof in the direction of advance **A,** the mutual movement of the metal sheets **2** relative to the telemeters **12** could be obtained by moving the telemeters **12** in the direction of advance **A** of the metal sheets **2,** which could alternatively be kept stationary in the direction of advance **A,** which would require, however, the conveyor **4** to be halted, or be allowed to advance in the direction of advance **A,** but with a speed lower than that of the telemeters **12** moving in the direction of advance **A.**

In addition, instead of being made in succession in the direction of advance **A** of the metal sheets **2,** the distance measurements could be made in succession in a direction transverse, in particular orthogonal, to the direction of advance **A** of the metal sheets **2.** This would require the telemeters **12** to be positioned side by side in the direction of advance **A** of the metal sheets **2** rather than in a transverse direction. In this case, the telemeters **12** could be all arranged on the same side of the conveyor **4,** or some on one side and some on the other side and moved in a direction transverse to the direction of advance **A** of the metal sheets **2.**

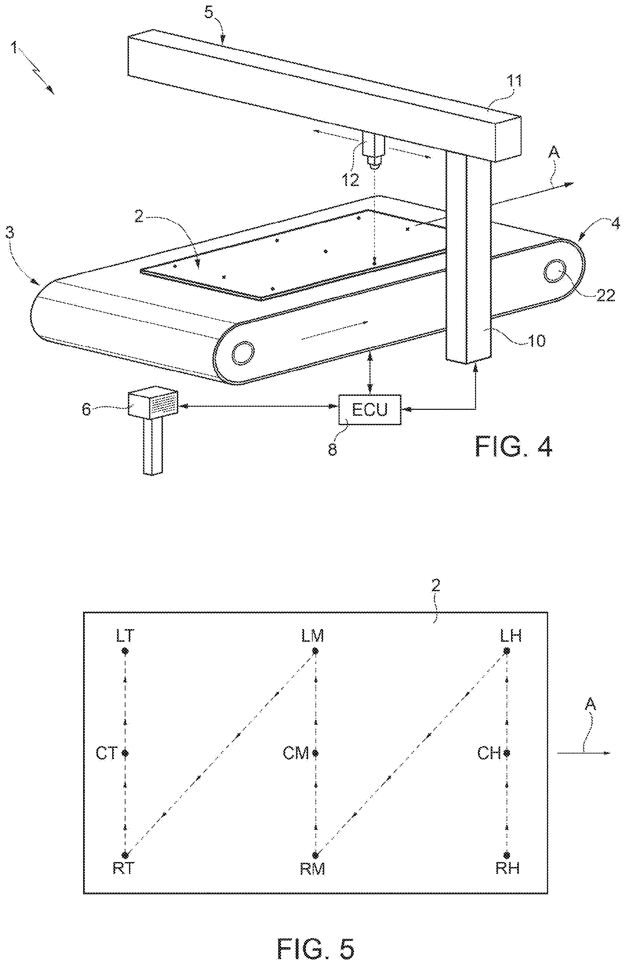

In this case, as illustrated in the embodiment shown in Figure 4, a single telemeter **12** would suffice, which, during the advance of the metal sheets **2,** should be moved back and forth transversely to the direction of advance **A** a number of times equal to the number of series of distance measurements to be made, three in the example described above, and, during each forward movement, should be operated a number of times equal to the number of measurements to be performed, three in the example considered, making it thus perform a zig-zag pattern on the metal sheet **2** as shown in Figure 5.

Finally, the flatness control system **1** according to the present invention could be used to control the flatness of sheets of a material different from the one described but still affected by problems similar to those described in relation to metal sheets, i.e. a material that can be affected by flatness defects such as to require the flatness to be controlled.

## Claims

1. A metal sheet flatness control system **(1)** to control flatness of metal sheets **(2)** obtained by flattening and shearing an uncoiled metal sheet web in a production line **(3);**
the metal sheet flatness control system **(1)** comprises:
▪ a support frame **(5);**
▪ a measurement apparatus **(7)** carried by the support frame **(5)** and comprising one or more telemeters **(12)** operable to measure distances relative to metal sheets **(2)** whose flatness is to be controlled, and output distance data indicative of the distance measurements; and
▪ an electronic control unit **(8)** connected to the measurement apparatus **(7)** to control operation thereof, and receive and process distance data received from each telemeter **(12)** to compute data indicative of the flatness of the metal sheets **(2);**
wherein the electronic control unit **(8)** is further configured to:
- operate each telemeter **(12)** to perform a series of distance measurements relative to a metal sheet **(2);**
- compute at least one flatness index for the metal sheet **(2)** based on distance data received from each telemeter **(12);**
- compare the flatness index computed for the metal sheet **(2)** with at least one threshold; and
- provide indications on the flatness of the metal sheet (**2**) based on the outcome of the comparison;
- compute a detail flatness index based on differences between consecutive distance measurements in a given direction; and
- compute a summary flatness index as maximum longitudinal deviation of consecutive distance measurements in a first direction and as maximum transverse deviation of consecutive distance measurements in a second direction transverse to the first direction.

2. The metal sheet flatness control system (**1**) of claim 1, wherein the electronic control unit (**8**) is further configured to:
- compute the maximum longitudinal deviation as maximum value of the absolute values of the differences between consecutive distance measurements in the first direction, and
- compute the maximum transverse deviation as maximum value of the absolute values of the differences between consecutive distance measurements in the second direction transverse to the first direction.

3. The metal sheet flatness control system **(1)** of any one of the preceding claims, wherein the first direction is a direction of advance **(A)** of the metal sheet **(2)** along the production line **(3).**

4. The metal sheet flatness control system (1) of any one of the preceding claims, wherein the given direction is a direction of advance **(A)** of the metal sheet **(2)** along the production line **(3).**

5. The metal sheet flatness control system **(1)** of any one of the preceding claims, wherein the electronic control unit **(8)** is further configured to operate each telemeter **(12)** to perform a series of distance measurements in a direction of advance **(A)** of the metal sheet **(2)** along the production line **(3),** and comprising at least two distance measurements at edge areas of the metal sheet **(2)** and one distance measurement at an intermediate area of the metal sheet **(2).**

6. The metal sheet flatness control system **(1)** of any one of the preceding claims, comprising three telemeters **(12)** arranged side by side in a direction transverse to the direction of advance **(A)** of the metal sheet **(2),** such that each telemeter **(12)** can perform a corresponding series of distance measurements relative to the metal sheet **(2)** at least at edge and intermediate areas of the metal sheet **(2).**

7. The metal sheet flatness control system **(1)** of any one of the preceding claims, wherein the measurement apparatus **(7)** further comprises:
▪ an electronically controlled positioning device **(13)** arranged between the support frame **(5)** and each telemeter **(12)** to allow the position of each telemeter **(12)** to be adjusted relative to the metal sheet **(2)** under the control of the electronic control unit **(8),** such that each telemeter **(12)** can perform the corresponding series of distance measurements relative to the metal sheet **(2).**

8. The metal sheet flatness control system (1) of any one of claims 1 to 4, wherein the electronic control unit **(8)** is further configured to operate each telemeter **(12)** to perform a series of distance measurements in a direction transverse to a direction of advance of the metal sheet **(2)** along the production line **(3),** and comprising at least two distance measurements at edge areas of the metal sheet **(2)** and one distance measurement at an intermediate area of the metal sheet **(2).**

9. The metal sheet flatness control system (1) of claim 8, wherein the measurement apparatus **(7)** comprises a single telemeter (12) mounted to move back and forth in a direction transverse to the direction of advance **(A)** of the metal sheet **(2),** and operable to perform at least two distance measurements at edge areas of the metal sheet **(2)** and one distance measurement at an intermediate area of the metal sheet **(2).**

10. The metal sheet flatness control system **(1)** of anyone of the preceding claims, further comprising:
▪ a location device **(22)** connected to the electronic control unit **(8),** and operable to output location data indicative of the measure locations where the distance measurements are performed by each telemeter (12);
and wherein the electronic control unit **(8)** is further configured to associate each distance measurement to a corresponding measure location.

11. A production line **(3)** to produce metal sheets **(2)** by flattening and shearing an uncoiled metal sheet web, comprising the metal sheet flatness control system **(1)** of any one of the preceding claims.

12. Software loadable in the electronic control unit **(8)** of the metal sheet flatness control system **(1)** of any one of claims 1 to 10 and designed to cause, when executed, the electronic control unit **(8)** to become configured as claimed in any one of claims 1 to 10.

## Patentansprüche

1. Metallblech-Ebenheits-Kontrollsystem (1), um eine Ebenheit von Metallblechen (2), die durch Glätten und Scheren einer abgewickelten Metallblechbahn in einer Produktionslinie (3) erhalten werden, zu kontrollieren;
wobei das Metallblech-Ebenheits-Kontrollsystem (1) umfasst:
• einen Halterahmen (5);
• eine Messvorrichtung (7), die von dem Halterahmen (5) gehalten wird und ein oder mehrere Telemeter (12) umfasst, die betreibbar sind, um Abstände relativ zu Metallblechen (2), deren Ebenheit kontrolliert werden soll, zu messen, und Abstandsdaten auszugeben, die die Abstandsmessungen angeben; und
• eine elektronische Steuereinheit (8), die mit der Messvorrichtung (7) verbunden ist, um deren Betrieb zu steuern und um Abstandsdaten von jedem Telemeter (12) zu empfangen und die empfangenen Daten zu verarbeiten, um Daten zu berechnen, die die Ebenheit der Metallbleche (2) angeben;
wobei die elektronische Steuereinheit (8) ferner konfiguriert ist:
- jedes Telemeter (12) zu betreiben, um eine Reihe von Abstandsmessungen relativ zu einem Metallblech (2) durchzuführen;
- wenigstens einen Ebenheitsindex für das Metallblech (2) auf der Basis der von jedem Telemeter (12) empfangenen Abstandsdaten zu berechnen;
- den für das Metallblech (2) berechneten Ebenheitsindex mit wenigstens einem Schwellenwert zu vergleichen; und
- Angaben der Ebenheit des Metallblechs (2) auf der Basis des Ergebnisses des Vergleichs bereitzustellen;
- einen Detail-Ebenheitsindex auf der Basis von Differenzen zwischen aufeinanderfolgenden Abstandsmessungen in einer gegebenen Richtung zu berechnen; und
- einen Gesamt-Ebenheitsindex als maximale Längsabweichung von aufeinanderfolgenden Abstandsmessungen in einer ersten Richtung und als maximale Querabweichung von aufeinanderfolgenden Abstandsmessungen in einer zweiten Richtung quer zu der ersten Richtung zu berechnen.

2. Metallblech-Ebenheits-Kontrollsystem (1) nach Anspruch 1, wobei die elektronische Steuereinheit (8) ferner konfiguriert ist:
- die maximale Längsabweichung als Maximalwert der Absolutwerte der Differenzen zwischen aufeinanderfolgenden Abstandsmessungen in der ersten Richtung zu berechnen, und
- die maximale Querabweichung als Maximalwert der Absolutwerte der Differenzen zwischen aufeinanderfolgenden Abstandsmessungen in der zweiten Richtung quer zu der ersten Richtung zu berechnen.

3. Metallblech-Ebenheits-Kontrollsystem (1) nach einem der vorhergehenden Ansprüche, wobei die erste Richtung eine Vorschubrichtung (A) des Metallblechs (2) entlang der Produktionslinie (3) ist.

4. Metallblech-Ebenheits-Kontrollsystem (1) nach einem der vorhergehenden Ansprüche, wobei die gegebene Richtung eine Vorschubrichtung (A) des Metallblechs (2) entlang der Produktionslinie (3) ist.

5. Metallblech-Ebenheits-Kontrollsystem (1) nach einem der vorhergehenden Ansprüche, wobei die elektronische Steuereinheit (8) ferner konfiguriert ist, jedes Telemeter (12) zu betreiben, um eine Reihe von Abstandsmessungen in einer Vorschubrichtung (A) des Metallblechs (2) entlang der Produktionslinie (3) durchzuführen, und umfassend wenigstens zwei Abstandsmessungen bei Kantenbereichen des Metallblechs (2) und eine Abstandsmessung bei einem Zwischenbereich des Metallblechs (2).

6. Metallblech-Ebenheits-Kontrollsystem (1) nach einem der vorhergehenden Ansprüche, das drei Telemeter (12) umfasst, die in einer Richtung quer zu der Vorschubrichtung (A) des Metallblechs (2) nebeneinander angeordnet sind, so dass jedes Telemeter (12) eine entsprechende Reihe von Abstandsmessungen relativ zu dem Metallblech (2) wenigstens an Kanten- und Zwischenbereichen des Metallblechs (2) durchführen kann.

7. Metallblech-Ebenheits-Kontrollsystem (1) nach einem der vorhergehenden Ansprüche, wobei die Messvorrichtung (7) ferner umfasst:
• eine elektronisch gesteuerte Positionierungsvorrichtung (13), die zwischen dem Halterahmen (5) und jedem Telemeter (12) angeordnet ist, um zu ermöglichen, die Position jedes Telemeters (12) relativ zu dem Metallblech (2) unter der Steuerung der elektronischen Steuereinheit (8) einzustellen, so dass jedes Telemeter (12) die entsprechende Reihe von Abstandsmessungen relativ zu dem Metallblech (2) durchführen kann.

8. Metallblech-Ebenheits-Kontrollsystem (1) nach einem der Ansprüche 1 bis 4, wobei die elektronische Steuereinheit (8) ferner konfiguriert ist, jedes Telemeter (12) zu betreiben, eine Reihe von Abstandsmessungen in einer Richtung quer zu einer Vorschubrichtung des Metallblechs (2) entlang der Produktionslinie (3) durchzuführen, und umfassend wenigstens zwei Abstandsmessungen bei Kantenbereichen des Metallblechs (2) und eine Abstandsmessung bei einem Zwischenbereich des Metallblechs (2).

9. Metallblech-Ebenheits-Kontrollsystem (1) nach Anspruch 8, wobei die Messvorrichtung (7) ein einzelnes Telemeter (12) umfasst, das montiert ist, um sich in einer Richtung quer zu der Vorschubrichtung (A) des Metallblechs (2) vorwärts und rückwärts zu bewegen und betreibbar ist, um wenigstens zwei Abstandsmessungen bei Kantenbereichen des Metallblechs (2) und eine Abstandsmessung bei einem Zwischenbereich des Metallblechs (2) durchzuführen.

10. Metallblech-Ebenheits-Kontrollsystem (1) nach einem der vorhergehenden Ansprüche, ferner umfassend:
• eine Ortsbestimmungsvorrichtung (22), die mit der elektronischen Steuereinheit (8) verbunden ist und betreibbar ist, um Ortsdaten auszugeben, die die Messorte angeben, bei denen die Abstandsmessungen durch jedes Telemeter (12) durchgeführt werden;
• und wobei die elektronische Steuereinheit (8) ferner konfiguriert ist, jede Abstandsmessung einem entsprechenden Messort zuzuordnen.

11. Produktionslinie (3) zum Produzieren von Metallblechen (2) durch Glätten und Scheren einer abgewickelten Metallblechbahn, umfassend das Metallblech-Ebenheits-Kontrollsystem (1) nach einem der vorhergehenden Ansprüche.

12. Software, die in die elektronische Steuereinheit (8) des Metallblech-Ebenheits-Kontrollsystems (1) nach einem der Ansprüche 1 bis 10 ladbar ist und die ausgelegt ist, dann, wenn sie ausgeführt wird, zu bewirken, dass die elektronische Steuereinheit (8) konfiguriert wird, wie in einem der Ansprüche 1 bis 10 beansprucht.

## Revendications

1. Système de contrôle de planéité de tôle (1) pour contrôler la planéité de tôles (2) obtenu en aplatissant et cisaillant une nappe de tôle déroulée dans une chaîne de production (3) ;
le système de contrôle de planéité de tôle (1) comprend:
▪ un cadre de support (5);
▪ un appareil de mesure (7) porté par le cadre de support (5) et comprenant un ou plusieurs télémètres (12) utilisable pour mesurer des distances par rapport à des tôles (2) dont la planéité doit être contrôlée, et des données de distance de sortie indicatives des mesures de distance ; et
▪ une unité de commande électronique (8) connectée à l'appareil de mesure (7) pour contrôler son fonctionnement, et recevoir et traiter les données de distance reçues de chaque télémètre (12) pour calculer des données indicatives de la planéité des tôles (2);
dans lequel l'unité de commande électronique (8) est en outre configurée pour:
- faire fonctionner chaque télémètre (12) pour effectuer une série de mesures de distance par rapport à une tôle (2);
- calculer au moins un indice de planéité pour la tôle (2) sur la base des données de distance reçues de chaque télémètre (12);
- comparer l'indice de planéité calculé pour la tôle (2) avec au moins un seuil; et
- fournir des indications sur la planéité de la tôle (2) sur la base du résultat de la comparaison;
- calculer un indice de planéité détaillé sur la base des différences entre les mesures de distance consécutives dans une direction donnée; et
- calculer un indice de planéité résumé en tant qu'écart longitudinal maximal de mesures de distance consécutives dans une première direction et en tant qu'écart transversal maximal de mesures de distance consécutives dans une deuxième direction transversale à la première direction.

2. Système de contrôle de planéité de tôle (1) selon la revendication 1, dans lequel l'unité de commande électronique (8) est en outre configurée pour :
- calculer l'écart longitudinal maximal en tant que valeur maximale des valeurs absolues des différences entre les mesures de distance consécutives dans la première direction, et calculer l'écart transversal maximal en tant que valeur maximale des valeurs absolues des différences entre les mesures de distance consécutives dans la deuxième direction transversale à la première direction.

3. Système de contrôle de planéité de tôle (1) selon l'une des revendications précédentes, dans lequel la première direction est une direction d'avance (A) de la tôle (2) le long de la ligne de production (3).

4. Système de contrôle de planéité de tôle (1) selon l'une des revendications précédentes, dans lequel la direction donnée est une direction d'avance (A) de la tôle (2) le long de la ligne de production (3).

5. Système de contrôle de planéité de tôle (1) selon l'une des revendications précédentes, dans lequel l'unité de commande électronique (8) est en outre configurée pour faire fonctionner chaque télémètre (12) pour effectuer une série de mesures de distance dans une direction d'avance (A) de la tôle (2) le long de la ligne de production (3), et comprenant au moins deux mesures de distance aux zones de bord de la tôle (2) et une mesure de distance à une zone intermédiaire de la tôle (2).

6. Système de contrôle de planéité de tôle (1) selon l'une des revendications précédentes, comprenant trois télémètres (12) disposés côte à côte dans une direction transversale à la direction d'avance (A) de la tôle (2), de sorte que chaque télémètre (12) peut effectuer une série correspondante de mesures de distance par rapport à la tôle (2) au moins au niveau des bords et des zones intermédiaires de la tôle (2).

7. Système de contrôle de planéité de tôle (1) selon l'une des revendications précédentes, dans lequel l'appareil de mesure (7) comprend en outre :
▪ un dispositif de positionnement à commande électronique (13) disposé entre le cadre de support (5) et chaque télémètre (12) pour permettre à la position de chaque télémètre (12) d'être ajustée par rapport à la tôle (2) sous le contrôle de l'unité de commande électronique (8), de sorte que chaque télémètre (12) puisse effectuer la série correspondante de mesures de distance par rapport à la tôle (2).

8. Système de contrôle de planéité de tôle (1) selon l'une des revendications 1 à 4, dans lequel l'unité de commande électronique (8) est en outre configurée pour faire fonctionner chaque télémètre (12) pour effectuer une série de mesures de distance dans une direction transversale à une direction d'avance de la tôle (2) le long de la ligne de production (3), et comprenant au moins deux mesures de distance au niveau des bords de la tôle (2) et une mesure de distance au niveau d'une zone intermédiaire de la tôle (2).

9. Système de contrôle de planéité de tôle (1) selon la revendication 8, dans lequel l'appareil de mesure (7) comprend un seul télémètre (12) monté pour se déplacer d'avant en arrière dans une direction transversale à la direction d'avance (A) de la tôle (2), et utilisable pour effectuer au moins deux mesures de distance au niveau des zones de bord de la feuille métallique (2) et une mesure de distance au niveau d'une zone intermédiaire de la feuille métallique (2).

10. Système de contrôle de planéité de tôle métallique (1) selon l'une des revendications précédentes, comprenant en outre :
▪ un dispositif de localisation (22) connecté à l'unité de commande électronique (8), et utilisable pour sortir des données de localisation indicatives des emplacements de mesure où les mesures de distance sont effectuées par chaque télémètre (12);
et dans lequel l'unité de commande électronique (8) est en outre configurée pour associer chaque mesure de distance à un emplacement de mesure correspondant.

11. Ligne de production (3) pour produire des tôles (2) en aplatissant et cisaillant une nappe de tôle déroulée, comprenant le système de contrôle de planéité de tôle (1) de l'une des revendications précédentes.

12. Logiciel pouvant être chargé dans l'unité de commande électronique (8) du système de contrôle de planéité de tôle (1) selon l'une des revendications 1 à 10 et conçu pour provoquer, une fois exécuté, la configuration de l'unité de commande électronique (8) comme revendiqué dans l'une des revendications 1 à 10.
